# EUROPEAN PATENT SPECIFICATION

(11) **EP 1 365 930 B1**
(45) Date of publication and mention of the grant of the patent: **04.04.2012**
(21) Application number: 02712089.8
(22) Date of filing: 18.02.2002
(51) Int. Cl.: B44B 5/02, C04B 41/53, B44B 3/06, B44C 1/22, B23K 26/03, C04B 41/91

(54) **METHOD AND DEVICE FOR MOUNTING AND PREPARING A GEMSTONE OR INDUSTRIAL DIAMOND FOR THE FORMATION OF A MARK ON THE SURFACE THEREOF**
VERFAHREN UND VORRICHTUNG ZUM BEFESTIGEN UND VORBEREITEN VON EDELSTEINEN ZUR MARKIERUNG IHRER OBERFLÄCHEN
PROCEDE ET DISPOSITIF POUR MONTAGE ET PREPARATION D'UNE PIERRE PRECIEUSE OU D'UN DIAMANT INDUSTRIEL POUR LA FORMATION D'UNE MARQUE SUR SA SURFACE

(30) Priority: 16.02.2001 GB 0103881
(43) Date of publication of application: 03.12.2003
(73) Proprietor: De Beers Centenary AG, 6000 Luzern 6 (CH)
(72) Inventor: WILLIS, Maxwell, Ralph, Oxfordshire RG9 1NJ (GB); CROWDER, Michael, John, Berkshire GU47 9RN (GB); GUY, Keith, Barry, Middlesex SL7 3PN (GB); SMITH, James, Gordon, Charters, Buckinghamshire HP13 5QL (GB)
(74) Representative: Talbot-Ponsonby, Daniel Frederick
(86) International application number: PCT/GB2002/000712
(87) International publication number: WO 2002/066263

(56) References cited:
- WO-A-00/76583
- WO-A-97/03846
- DE-A- 2 702 176
- US-A- 3 527 198
- US-A- 5 760 367
- US-A- 5 932 119

## Description

### Background to the Invention

The present invention relates generally to forming a mark, preferably a micro mark, on a gemstone or industrial diamond, and to setting up the gemstone or diamond for the procedure. The term "micro mark" as used herein is any very small mark on a gemstone or industrial diamond. The mark may be a recognisable commercial brand or trade mark, such as the name or logo of a diamond jewellery retailer, manufacturer or trade organisation. It is possible to apply the marks to industrial diamonds, some of which (like wire-drawing dies) have polished surfaces. Nonetheless, the invention is more applicable in the field of jewellery, the mark being applied to one of the polished facets of a gemstone, preferably the table. Various proposals have been made for forming on gemstones or industrial diamonds marks which are invisible to the naked eye; thus in the case of a gemstone, the mark can be on a facet which will be visible in a jewellery setting. In a strict sense, most viable procedures form the mark in (rather than on) the surface in that the mark is formed by removal of material (termed milling). However, the expressions such as "on the surface" as used herein include such milling, in accordance with conventional parlance.

The depth of the mark, primarily, is controlled so as to limit the visibility of the mark to a level that does not detract from the aesthetic properties and hence value of the gemstone - specifically for diamonds, it is preferred that the mark be such that it does not detract from the internal clarity grade of the diamond. In general, the mark should be invisible to the naked eye. In the broadest sense, the mark should not detract from the beauty or aesthetic appearance of the gemstone. There are various standards, but the normal requirement is that internal defects be invisible under x10 magnification, by using the naked eye aided with a x10 loupe, although as the marking of diamonds becomes more popular, some visibility of the mark may be acceptable, particularly as the marks are not strictly internal defects. For example, marks occupying an area of up to 1 mm² etched to a depth of 25 nm or 50 nm can be acceptable although they are visible under certain lighting conditions with x 10 magnification. Much deeper marks, up to 500 nm deep, may also be acceptable. A minimum depth is about 20 or about 30 nm. However, it is preferred that on a gemstone the mark be shallow enough not to produce significant light scattering from any region. In WO 97/03846, there is a description of the dimensions of the marks that can be formed. The lines of which the marks are formed can have a width:depth ratio of say from about 20:1 to about 3000:1, but the preferred range is from 50:1 to 1000:1.

The marks can be formed in any suitable manner. One way is to use microlithography, where the facet is spin-coated with a resist or photoresist, and either an image of a mask is projected onto the coated facet using an exposure radiation which exposes the resist (normally, a lens system is used which substantially reduces the image size relative to the mask) or an image is written on the coated facet using a moving beam (direct beam writing). The resist is then developed to remove selected portions, in effect providing a contact mask on the facet. During development, the exposed and unexposed regions of the resist are developed at different rates - in a positive tone resist, it is the exposed regions that dissolve more readily, leaving the surface or facet unmasked in the exposed regions. There is a detailed description of microlithography in Thompson et al. "Introduction to Microlithography", 2nd edition (1994). The gemstone or industrial diamond can then be milled using for instance plasma etching as disclosed in US 5 344 526 or WO 98/52773. Another way is to use radiation which directly attacks the surface of the diamond or gemstone, either projected through a mask or written directly on the surface, for instance as disclosed in WO 97/03846.

The invention relates more specifically to mounting and preparing a gemstone or industrial diamond for the formation of a mark on a surface thereof.

US 4,056,952 discloses a diamond with a microscopic inscription formed at a specific position on the outer surface of the diamond gem structure. The diamond is embedded in resin, which is then ground to expose the cule or the table.

US 5,760,367 discloses a method for decorating a gemstone with colored indicia. The indicia are engraved by a laser beam directed to the exterior surface, while the gemstone is held in a manner so that the laser beam is precluded from reflecting internally within the gemstone.

It is desirable to increase the rate of marking gemstones or industrial diamonds. One of the problems is that it takes some time to set up the gemstone or diamond. The surface should be set accurately normal to the exposure radiation so that the complete area of the image is in focus and an example of a maximum tilt tolerance is about 0.1 ° or 0.2°. The surface should also be set generally at a particular height, though quite a large error is tolerable, for example up to ± 100 micron; small differences in height can be catered for by adjustable focusing, provided the surface to be marked is not too far out of the reference plane of the equipment. However, the etch rate is sensitive to the height of the surface to be etched. Thus it is desirable to provide a way of holding the gemstone or diamond with its surface normal to the exposure radiation and at a height generally close to a predetermined height As the diamond may need to be spin-coated with resist and to be heated to set the resist, the holding must be secure and heating to say 105°, 110° or 115°C for a time of 50 to 70 seconds should not significantly alter the positioning of the gemstone or diamond.

WO 00/76583 proposes a solution to this problem by providing a holder in the form of a metal plate which has cylindrical through bores of approximately the same size as diamonds to be mounted in the plate. The plate is placed on a planar reference or contact surface and the diamonds are inserted table down into the bores so that their tables engage the contact surface. A plug is inserted into each bore and an adhesive paste is applied between the diamond and the plug and between the plug and the bore, the paste drying to secure the plug and the diamond in the bore. This solution requires a wide range of holders with bores of different size and risks a slightly outsize diamond becoming stuck in the bore, or not being correctly levelled, or not being securely fixed, and also risks points on the diamond being fractured.

In general terms, the gemstone or diamond should be held in a manner that is suitable for all the processes involved in marking. In addition to this, the mounting method should be as simple and quick as possible for mounting, de-mounting and cleaning up. In most marking procedures, there are six main processes plus the mounting procedure itself. They are listed with desirable features:
mounting - should be quick, clean, safe, reliable, cheap, and simple;
cleaning - there should be a completely clear table;
spinning - there should be convenient handling and secure holding of the gemstone or diamond;
baking - this is discussed below;
exposure - the surface to be marked should be level, as discussed above;
develop - there should be convenient handling;
etch - the mount should be vacuum compatible and the gemstone or diamond should be central to the mount to within 0.5mm;
de-mounting - as for mounting;
mount and stone cleaning - as for mounting.

It is known to use the following:
hot melt adhesives - the temperature is above the health and safety limit of 40°C,
and chemical cleaning, often acid, is required for the stone and the holder;
cold adhesive - these have a long cure time and usually require an acid etch for removal;
mechanical claw holding - this is relatively large and expensive and requires time-consuming setting up - there are significant variations for different gemstones and diamonds and poor heat transfer.

The problems have impeded the commercial exploitation of the techniques of particularly microlithography for etching marks into diamond, but also generally.

WO 97/03846 discloses an arrangement in which a diamond is located in a hollow of a holder by putting a blob of plasticine in the base of the hollow and pushing the diamond into position.

Normally, the resist referred to above must be baked when it has been applied. The temperature and duration of baking are critical because the required amount of exposure of the resist depends upon the nature of the resist and the extent to which it has been baked. If the baking is wrong, the exposure will normally be wrong - for instance, the baking must not be so long that the resist dries out. Temperatures and duration are indicated above.

It is an object of the invention to overcome or ameliorate at least one of the disadvantages of the prior art, or to provide a useful alternative, in relation to mounting the gemstone or diamond.

### Summary of the Invention

The aspects of the invention provide a method as set forth in Claim 1 and a holder as set forth in Claim 34. The dependant claims claim preferred and/or optional features. Thus in general the gemstone or diamond is placed in a mould, the surface to be marked is engaged with a contact surface, a setting or holding material is moulded around the gemstone or diamond and holds the gemstone or diamond securely so that it cannot move relative to the holding material, and a locating surface is defined which is parallel to or coplanar with the contact surface. The locating surface could be on the holding material but may be it is more convenient to keep the gemstone or diamond in the container and have the locating surface on the container.

The steps set out need not be taken in the order set out - for instance, the container may be filled with liquid holding material before or after placing the gemstone or diamond in the container, depending on the procedure. If the container is circular, it can be said to have a single sidewall.

The method provides a way of setting the gemstone or industrial diamond so that the respective facet or surface can be coplanar with a reference surface, thereby enabling the gemstone or industrial diamond to be easily handled and to be quickly and simply positioned for treatment with the exposure radiation. One advantage is that for most gemstone shapes and sizes, only one size of container is required. It would be possible for the gemstones or diamond to be mounted in individual workshops, for sending for marking elsewhere. The mounted diamonds or their source could be identified by marking the container or the holding material, or by incorporating into the holding material a colouring agent or a tracing means or a covert tagging substance.

It is preferred that the holding material should not adhere to the gemstone or diamond, to avoid later cleaning problems, retaining the gemstone or diamond purely by mechanical interlock, i.e. by shape. Nonetheless, the gemstone or diamond is held securely by the holding material and cannot move relative to the holding material either in a direction normal to the surface to be marked or in a direction parallel to such surface. In the case of a gemstone, the holding material in effect transfers any force to the girdle as the girdle is gripped by the holding material.

In theory at least, if the resist is applied by spinning, the relevant surface of the holding material can be co-planar with the facet or surface of the gemstone or diamond so that any bead or rim is formed outside the surface to be marked; however, if a bead is formed due to a discontinuity, the mark can be formed away from the edge of the surface.

The resist need cover only the surface to be marked, and during etching, all parts of the gemstone or diamond, except for the surface being marked, can be protected by the holding material, preventing unintended etching of other facets. Thus in the case of a gemstone facet, all parts of the gemstone around the facet can be covered with the holding material - the holding material top surface can be coplanar with the surface to be marked.

Using the invention, high quality marks can be applied using relatively inexpensive and reliable apparatus, which allows the integration of the method of the invention into the manufacturing process for polished gemstones or industrial diamonds at an economic cost.

In general, the holding material should be stable at the resist baking temperatures referred to above, if a resist is used. Different types of holding material can be used.

A first, preferred type of holding material may be flexible or may be elastic, for instance .. being an elastomer. An elastomer is rubbery and elastic; although not limited to this definition, an elastomer is a material (which can be a natural rubber, synthetic rubber or plastics material) which at room temperature can be stretched under low stress to at least twice its original length and, upon immediate release of the stress, will return with force to its approximate original length. The word "elastic" as used herein has this general sense, though it is not limited thereto. Provided the holding material holds the diamond sufficiently securely, for instance when spinning on the resist, some flexibility is acceptable because during the critical stage, namely exposing the surface to form the mark, the diamond is under practically no stress. An advantage of using a flexible or elastic holding material is that at the end of the procedure, when the surface has been marked, the gemstone or diamond can be merely popped out, for instance being pushed out from the back, with a relatively low force; it is not essential at this time that the holding material should not be distorted beyond its elastic limit because it will normally be ripped out (if it is in the container) and then thrown away or recycled. The container need not be cleaned. After de-mounting the gemstone or diamond, the gemstone or diamond need be cleaned only for removal of the resist.

Regarding the choice of the hardness of the elastic or flexible holding material, a compromise is made. The harder the holding material, the better for positioning and also for resistance during etching and cleaning. However, if the holding material is too hard, it is more difficult to remove the gemstone or diamond, and with some specially shaped stones such as marquises, there is a danger of chipping a corner if the holding material is too hard. In general, the holding material may be sufficiently elastic or flexible to be able to push the gemstone or diamond out of the holder in a direction normal to the surface to be marked, without breaking away pieces of the holding material though there may be some splits in the holding material. More preferably, there would be no splits in the holding material though the holding material may be distorted beyond its elastic limit. The hardest holding materials can be used for round brilliant-cut stones, and as measured on the Shore (Durometer) A scale, the Shore hardness can be for example from about 60 or 70 up to about 100; for round brilliant-cut diamonds, a preferred hardness is about 92. In theory, the holding material, even if made of polymer, could be hard at room temperature and be heated in order to remove the stone, but this is not desired. The holding materials could be transparent - transparency assists alignment of particularly "fancy" shapes, i.e. gemstones that are not circular in plan view. The lower the thermal conductivity, the better. Suitable plastics are thermoplastics, or synthetic rubbers, preferably thermoplastic in behaviour (i.e. being meltable and re-solidifying). However, the holding material could be made by injecting the precursors so that the holding materials sets by chemical reaction. Also, although the preferred method uses hot injection moulding, it may be possible to find a suitable polymer which can be cold poured and sets by chemical reaction.

A second type of holding material is brittle, so that the holding material can be easily broken at the end of the marking procedure, to release the gemstone or diamond without risking damage to the gemstone or diamond. The holding material could be injection moulded as a brittle polymer or its precursors or inserted in another way.

A third type of holding material is a liquid above its melting point, which sets by normal freezing or solidification. With a choice of a high thermal conductivity for the holding material, the gemstone or industrial diamond can be heated in a short time and its temperature can be accurately controlled. The gemstone or industrial diamond is in good thermal contact with the holding material.

One such holding material is a metal, such as indium or a suitable alloy thereof. Metals or alloys other than indium could be used. Preferred alloys are eutectic alloys because they have a single melting point, one such being a tin/bismuth alloy. Indium has a high thermal conductivity and its melting point is about 156°C which means that it can be easily melted. The resist baking temperature is safely below the melting point, and superheated water can be used for the baking. Indium has a low vapour pressure. It tends to wet diamond. A flux may be used. Indium causes no measurable damage to diamond at the temperatures which can be used, though at higher temperatures, there would be a risk of etching.

At the end of the procedure, the solidified holding material of the second type can be melted to remove it, and any traces remaining on the gemstone can be wiped off. Although indium tends to wet diamond as indicated above, it does not stick to the diamond surface. If any traces remain, they can be removed with for instance aqua regia.

The use of either type of holding material facilitates cleaning the surface of the gemstone or industrial diamond. Suitable cleaning chemicals may be used without dissolving the holding material and for instance causing contamination. The holding material surface is relatively soft and masks the sharp edges and corners of the facet or surface to be marked, preventing or reducing the abrasion of cleaning wipes and the like used during mechanical cleaning.

A large range of gemstone and industrial diamond sizes and shapes may be mounted in the same size of holder. By suitable arrangement, a plurality of stones may be mounted in one holder.

The container can be of any suitable type. For instance, it can have an open top which is placed against the contact surface, or it can have an open bottom which is placed against the contact surface, or it can be in the form of a ring whose top or bottom is placed against the contact surface and, if required, the other end closed off with another member. In its broadest concept, the container need not form part of the holder but can serve merely to mould the holding material in position, being removed later, or can form a die from which the holding material and the gemstone or diamond are removed. If the container does not form part of the holder, the holding material would have to be sufficiently rigid. A locating surface on the container or die would define a corresponding surface on the holding material for locating the holder for a further procedure, e.g. exposure of the resist, for the formation of the mark, so that the container locating surface indirectly locates the holder for the further procedure. The locating surface may be a surface of the container or die opposite the contact surface. Alternatively the locating surface may be the contact surface so that the corresponding surface on the holding material is coplanar with the gemstone or diamond surface to be marked. In this alternative, the holder could be located under a table or platen for the exposure step, registering on the lower surface of the table, and a hole being provided in the platen for the exposure radiation.

A general concept of the invention is that whatever the arrangement of the holder and holding material, or even if the gemstone or diamond is merely stuck to a holder, a part of the gemstone or diamond opposite the surface to be marked may be arranged not to be covered with holding material or adhesive so that it is free or exposed and so that the part can be heated or cooled to thereby heat or cool the gemstone or diamond. If holding material is used, said part preferably projects from the surrounding holding material. In this way, the gemstone or diamond can be directly heated or cooled, for instance using a Peltier heat pump, or heated using steam or a hot liquid such as superheated water or solder. Other ways of heating are possible, for instance by irradiating the surface to be marked, or the opposite side of the gemstone or diamond, with infra-red radiation. If the gemstone or diamond is surrounded with a holding material of low thermal conductivity, or is surrounded with air, very rapid heating and cooling can be obtained and very accurate temperature control. This concept of the invention can lead to superior control of the lithography process.

### Preferred Embodiments

The invention will be further described, by way of example, with reference to the accompanying drawings, in which:
Figures 1a to 1d are schematic vertical sections illustrating a method of setting a gemstone in a first holder;
Figure 2 is a schematic vertical section illustrating a method of setting a gemstone in a second holder;
Figure 3 is a vertical section, illustrating a third holder;
Figure 4 is a vertical section, part cut-away, through a moulding tool for setting a gemstone in the third holder;
Figure 5 is a vertical section, illustrating a fourth holder; and
Figure 6 is a vertical section through part of a Peltier device, showing the diamond in the third holder being heated or cooled.

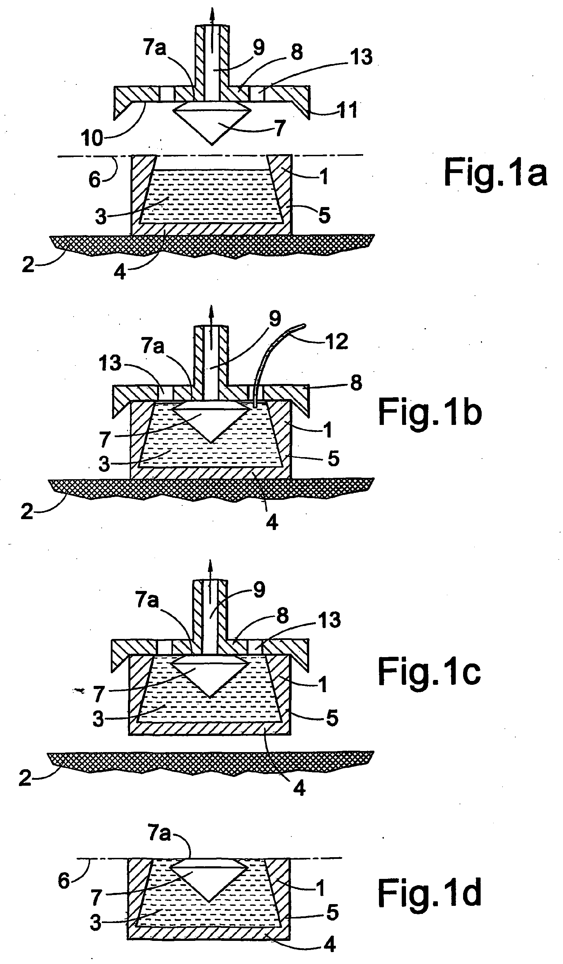

### Figures 1a to 1d - First Holder

Figure 1a illustrates a holder 1 placed on a heated platen or hotplate 2. The holder 1 contains a holding material 3 which has been liquefied by heating. The holder 1 is formed by a base 4 and inwardly inclined sidewalls 5 so that the holder 1 provides an upper opening. The tops of the sidewalls 5 are planar and provide a reference or locating surface or plane 6. The underside of the base 4 can be strictly parallel to and a predetermined distance below the reference plane 6, and act as a locating surface.

### Mounting the Diamond in the First Holder

A diamond 7 is placed in the centre of a vacuum chuck 8 (vacuum being applied to the centre duct 9), and is held in place by the vacuum. The chuck 8 defines a cover for the holder 1 with a planar undersurface 10 which acts as a contact surface and against which lies the planar table 7a of the diamond 7. The undersurface 10 is surrounded by a downwards projection 11 which surrounds the sidewalls 5 when the chuck 8 is lowered.

If the holding material 3 is indium, the platen 2 can be heated to a temperature of 170°C, above the indium melting point of 156°C.

The chuck 8 is lowered until its lower surface is in contact with the top of the holder 1, when the reference plane 6 engages or coincides with the surface 10 (Figure 1b). The inward inclination of the side walls 5 reduces any tendency for the molten holding material to splash up onto the underside of the chuck 8, causing any splashing to be directed inwards. Quickly lowering the diamond 7 may freeze the holding material 3; this enables one to use a very quick procedure, plunging in the diamond 7, and then picking up the chuck 8. Alternatively, in a procedure where this does not occur, further holding material in the form of a wire 12 may be introduced through openings or vias 13 until the holder 1 is completely filled, the wire 12 melting as it is heated by contact with the holder 1 (if it touches) and with the already molten holding material 3. In another alternative procedure, enough holding material 3 is used to rise above the girdle of the diamond 7, but a space is left between the surface of the holding material 3 and the underside of the dop 8.

The holder 1 is then cooled to freeze the holding material 3 (if not already frozen), for instance by reducing the set temperature of the hotplate 2, or applying a cooling liquid or a colder solid object to the holder 1. The degree of cooling required is not great since the holding material 3 has only to be cooled to below its melting point, not to room temperature.

The chuck 8 may then be used to lift the holder 1 and diamond 7 from the hotplate 2, allowing further cooling to occur (Figure 1c). The vacuum may then be switched off. The holder 1 forms a dop with the diamond 7 set in the holder 1 with its table 7a coplanar with the under surface 10 of the chuck 8 and with the locating surface or plane 6 (see Figure 1d), and strictly parallel to the underside of the base 4. The dop (1) may be separated from the chuck 8. By suitable choice of the material of the chuck 8 and of the holding material 3, the dop (1) may drop off when the vacuum is discontinued - for instance, if the holding material 3 is indium or a bismuth/lead alloy, the chuck 8 can be made of aluminium alloy.

In general, the holder 1 and chuck 8 may be made of aluminium or aluminium alloy, brass, stainless steel or machinable ceramic. The holder 1 and chuck 8 can be of circular shape.

If the holder 1 is a suitable size and a suitable number of vacuum ducts 9 are provided, a plurality of diamonds 7 can be mounted in the holder 1.

### Cleaning:

The diamond 7 can now be cleaned, for instance by mechanical cleaning with swabs moistened in alcohol or by drawing the diamond 7 and dop (1) across a proprietary optical lens cleaning tissue or the like. Alternatively, the dop (1) may be mounted on a vacuum chuck and rotated about an axis preferably perpendicular to the table 7a of the diamond 7. In this case, a solvent can be applied, followed by spin drying, mechanical cleaning.

### Resist Coating

If the facet is to be etched by microlithography, the dop (1) can be mounted on a vacuum chuck and rotated about the vertical axis which is perpendicular to and passes through the table 7a of the diamond 7. If a plurality of diamonds 7 have been set in the dop (1), the axis should be approximately through the centre line of the dop (1).

Photoresist is applied to cover at least the table 7a of the diamond 7. A suitable positive-tone resist material is Microposit 1818, manufactured by the Shipley Company, which is a diazonaphthoquinone/novolak resist. The chuck with the dop (1) and stone 7 are rotated at high speed, typically 4000 to 8000 r.p.m., for a period of typically 15 to 30 seconds. This results in a film of resist of uniform thickness over the greater part of the diamond table 7a, of typically one to two microns. If the top surface is continuous across the diamond table 7a, the surface of the holding material 2 and the tops of the sidewalls 5 of the dop (1), no bead or rim would be formed on the diamond table 7a.

### Pre-Exposure Bake

The resist is then baked. Typical conditions will be one minute at 115°C. This can be done by placing the dop (1) on a hotplate, preferably using a vacuum -chuck to hold it in intimate contact. Heat enters the dop (1) via the contact with the hotplate and rapidly transfers to the diamond 7. Alternatively, the heating effect may be produced by inductive heating, a heating element incorporated in the dop (1), or in any other suitable way such as irradiating the table 7a with infra-red radiation. The temperature of the dop (1) may be measured by a thermocouple mounted in the dop (1) or in contact with it, and this measurement can control the heating means to regulate the temperature. Alternatively, the temperature of the hotplate may be measured and controlled.

After baking, the source of heat is discontinued and the dop (1) quickly cooled. The diamond 7 is now ready for exposure of the resist.

### Optical Exposure

The dop (1) is placed on a horizontal platen of suitable microlithography equipment for exposing the resist in a pattern corresponding to the mark to be formed, for instance by projecting a mask onto the diamond table 7a with a reduction (de-magnification) of x10. The location, orientation and focus of the exposure image are adjusted as appropriate, the diamond table 7a being maintained strictly parallel to and a strictly determined height above the platen of the equipment. In an alternative arrangement, the dop (1) can be held up against a downwards-forming register surface provided with an opening through which the diamond table 7a can be irradiated. In this alternative, the underside of the base 4 need not be strictly parallel to and a predetermined distance below the reference plane 6.

Any suitable radiation may be used for exposing the resist. For the Microposit 1818 resist, electromagnetic radiation in the wavelength range of 350 to 450 nm is suitable. Shorter wavelengths allow higher resolution patterning. The exposure may be with a single wavelength, for instance the mercury discharge lamp G-line at 436 nm, or with a band of wavelengths, for example with a filtered tungsten/halogen lamp.

### Post-Exposure Bake

It may be desirable to subject the resist to a post-exposure bake. A process of diffusion reduces the influence of standing waves or interference fringes in the resist. The procedure is similar to that of the pre-exposure bake described above.

### Development

Development of the resist can be conventional. The apparatus used may be similar to the resist spinner described above.

### Etching

Plasma etching equipment may be obtained from for instance Oxford Plasma Technology (UK) or South Bay Technology (USA). DC discharge etching may be used but it is preferred to use a radio frequency plasma to avoid problems with the diamond charging. Reactive ion etching is preferred, the diamond being mounted on the driven electrode of the etcher rather than on the earth electrode. In one example, the diamond develops a negative bias potential relative to the plasma of eg 100 to 1000 volts. The bombardment with energetic ions from the plasma may cause a partial conversion of the unreactive diamond allotrope of carbon to more reactive forms such as graphite. Pure oxygen or an oxygen/argon mixture or air can be supplied to oxidise the graphite. The preferred plasma is 75% argon and 25% oxygen, though alternatively a pure oxygen etch could be used, followed by a pure argon etch to remove surface-terminating oxygen.

### Release

After etching, to release the diamond 7, the dop (1) is placed on a hotplate until the holding material 3 melts. The diamond 7 floats up and can be removed with a vacuum chuck or with tweezers.

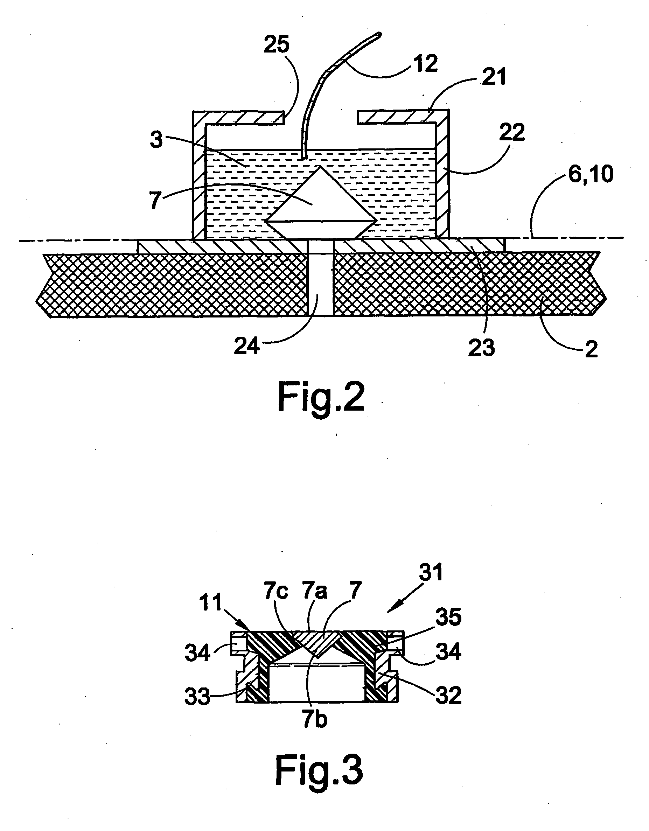

### Figure 2 - Second Holder

Figure 2 shows that a holder 21 can be placed over the diamond 7. The reference or locating surface or plane 6 is defined by the bottom of the sidewall 22 of the holder 21, which has a bottom opening. The upper side of the top of the holder 21 can be strictly parallel to and a predetermined distance above the locating plane 6. The diamond is placed on a plate 23 having a planar upper surface 10 which forms the contact surface and is held there by suction through an opening 24. The holder 21 has a top opening 25 for feeding in holding material 3 in the form of a wire 12. The holder 21 need not be completely filled. When sufficient holding material has been added, it is cooled, the suction is discontinued and the holder 21 is lifted off the plate 23, with the diamond 7 set inside the holder 21. The advantage of this arrangement is that the contact surface 10 gets covered first and the surface of the holding material 3 so formed is planar without any rippling.

The holder 21 can be positioned in the microlithography equipment in either of the alternative ways described above for the holder 1.

### Figure 3 - Third Holder

The third holder or dop 31 has a circular annular dop ring or container 32 forming a single sidewall with an undercut 33 in the form of a half dovetail. The ring has two injection moulding gates 34 and contains holding material 35 which securely holds a brilliant-cut diamond 7 having a table 7a, a culet 7b and a girdle 7c. The top surface of the holding material 35 is coplanar with the table 7a, and there is holding material 35 both above and below (in front of and behind looking in the direction normal to the table 7a) the girdle 7c so that the diamond 7 is held securely by the holding material 35 and cannot move relative to the holding material 35 either in the direction normal to the table 7a or in a direction parallel to the table 7a. The diamond culet 7b projects from surrounding holding material 35.

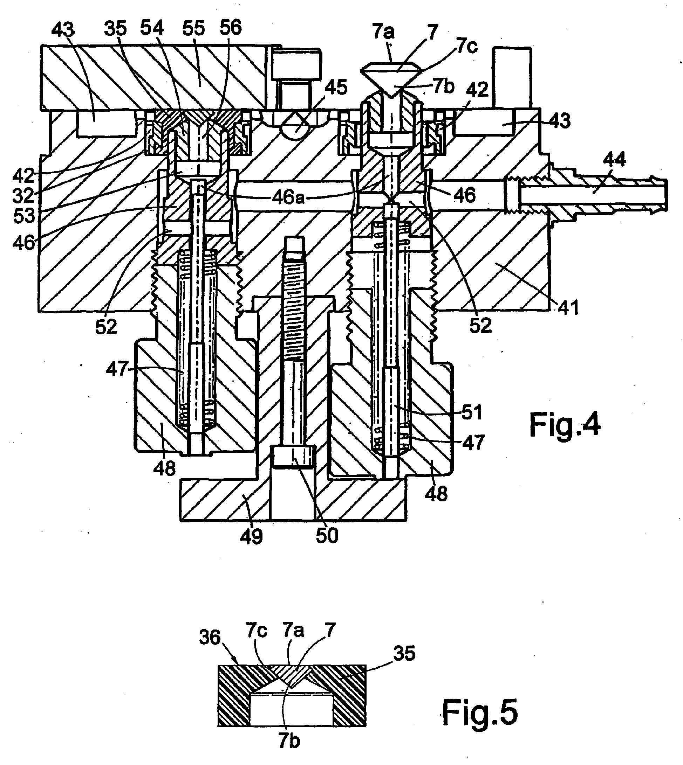

Figure 4 illustrates how the dop 31 is formed. Figure 4 shows an injection moulding tool having a body 41. In the arrangement shown, the body 41 has two injection moulding or die cavities 42, two dump cavities 43 and a vacuum connection 44 with suitable ducting within the body 41. Each die cavity 42 has a peg (not shown) for locating a dop ring 32 in the cavity with one gate 34 connecting with a main gate 45 and the other gate connecting with a dump cavity 43. Two centralising pins 46 are vertically slidable within the body 41 and are biased upwards by helical compression springs 47. The springs 47 should provide a firm light pressure, but sufficient to push the centralising pins 46 up after moulding. The left-hand side shows the centralising pin 46 in the moulding position whereas the right-hand side shows the centralising pin 46 in the load, i.e. high, position. The springs 47 are retained by thumb screws 48 screwed into the main body 41, and the main body 41 carries a thumb screw backstop 49 held in position by a cap screw 50. The base of each thumb screw 48 carries a vent blocking pin 51 which passes up into a central bore 46a in the respective centralising pin 46. Each centralising pin 46 has a cross-bore 52 and defines a cylindrical cavity 53 at its top end holding an insert 54. Above the main body 41, there is a raisable top plate 55, only the left-hand part being shown, in the closed position.

The moulding sequence is as follows:
1. Load the dop rings 32 into the die cavities 42.
2. Locate the culet of each diamond 7 in the recess in the top of the insert 54 which is formed by a bore 56 in the insert 54. Just by way of illustration, Figure 4 shows a 0.25 carat (0.05 gram) diamond 7 on the left-hand insert 54 and a 2 carat (0.4 gram) diamond 7 on the right-hand insert 54. Vacuum is used to hold the diamonds 7 in place. The top recess in the insert 54 centres the diamond 7 if the diamond is say brilliant-cut, and holds the table 7a upwards. Although the same size insert 54 can be used for a large range of diamond weights, it is possible to provide different-sized inserts 54. In addition, if the diamond is a "fancy" cut, for instance having a keel, specially-shaped inserts can be provided. As explained later, excessive holding material should not pass into the bore 56 and the maximum gap tolerable is around 30 microns.
3. The top plate 55 is lowered. It pushes the diamonds 7 down, compressing the springs 47 and causing the diamond tables 7a to engage securely the underside of the top plate 55 so that the diamond tables 7a firmly abut the contact surface provided by the underside of the top plate 55 and are level. Effectively, the diamonds 7 are clamped both central and flat. As can be seen on the left-hand side of Figure 4, as the centralising pin 46 was pushed down, the vent blocking pin 51 enters the central bore and greatly reduces the size of the passage.
4. The thumb screws 46 are wound up to gently lock the centralising pins 46 in position and prevent the pressure of injection moulding pushing the centralising pins 46 down.
5. The tool is put in an injection moulding machine and a liquid elastomeric holding material 35 is injected through the main-gate 45, the first part passing right through the respective dop ring 32 and into the dump cavity 43 to dump the cooler initial charge and expel air. The restricted passage around the vent blocking pin 51 allows air to leak out between the diamond 7 and the insert 54 but is sufficiently small to prevent holding material 35 leaking into the vacuum passages. However, the bore 56 and the cavity 53 will fill with holding material 35, which will have a shape like a rivet head. Because the gates 34 are in the side of the dop ring 32, there is no problem of holding material 35 protruding over the top of the dop ring 32. In general, it is not essential that the holding material should fill the dop ring 32 as long as the diamond 7 is locked in place, but the arrangement is such that the dop ring 32 will be filled.
6. The tool is removed from the injection moulding machine and the thumb screws 48 are backed off.
7. The top plate 55 is lifted, when the springs 47 will push up the centralising pins 46, lifting the diamonds 7 which have now been secured in the dop rings 32 to form dops 31.
8. The dops 31 are lifted off the tops of the centralising pins 46. If holding material 35 has leaked behind the diamond 7, the inserts 54 will come away with the dops 31, being trapped by the "rivet head" of holding material 35. The "rivet head" is then ripped off; the holding material 35 will break at the point of minimum cross-sectional area, which is where the diamond culet 7b sits in the bore 56 of the insert 54. Ripping off the "rivet head" exposes the culet 7b. If there are any excess pieces of holding material 35 on the culet 7b, they can be picked off with tweezers.
9. Excess holding material 35 is pulled out of the dump cavity 43 and the runners.
10. The inserts 54 are replaced in the centralising pins 46.

The cycle time can be about one minute (four dops 31 every two minutes), and no preheat is necessary. If the holding material 35 is Elastron G 1047, it can be injected at 180°C. The moulding tool and the dops 31 do not reach a temperature above 40°C, so health and safety are not compromised. The diamonds 7 can be central to within 0.5mm. Very little holding material 35 is used, and its cost is therefore low; also, if appropriate, it can be recycled.

The dops 31 now contain diamonds 7 with the tables 7a strictly parallel to the upper and lower faces (the end faces) of the dop rings 32, either of which can form a locating surface. In general, it is expected that the holding material 35 will shrink slightly. The holding material 35 has engaged beneath the undercut 33 (see Figure 3), and as the holding material 35 shrinks, the undercut pulls the diamond 7 down very slightly though the diamond table 7a will remain strictly parallel to the top of the dop ring 32 because of the symmetry of the arrangement. The undercut 33 locks the holding material 35 to the dop ring 32.

Any suitable materials can be used for the holding tool. However, in one arrangement, the body 41 is made of tool steel, the top plate 55 is made of a clear plastic such as a polycarbonate, e.g. Macrolon (which enables the interior to be seen) - if there are difficulties due to the holding material 35 creeping over the top edges of the dop ring 32, the top plate 55 could have its lower surface provided with a rubber liner. The inserts 54 are made of an acetal or polyformaldehyde resin, e.g. Delrin, which is rigid enough for centering and leaving small air passages but will not chip the diamond 7. The dop ring 32 itself can be made of stainless steel or of aluminium alloy or aluminium.

### Figure 5 - Fourth Holder

The fourth holder or dop 36 is like the dop 31 but has no dop ring 32, being formed entirely of the holding material 35. The dop 36 is shown a having been moulded in an injection moulding cavity 42 of the tool of Figure 4, with the sprues subsequently pulled off. The holding material 35 is a hard polymer and the polymer and the material of the insert 54 are chosen such that the holding material 35 will not adhere to the insert 54; in this way, the insert 54 may still be lifted off the centralising pin 46 but will be retained in the dop 36 only by polymer that has penetrated into the bore 56, and can be separated as described above. The top and bottom of the die cavity define locating surfaces which form the top and bottom surfaces of the dop 36 and indirectly locate the diamond table 7a for forming the mark. Thus either the top surface or the bottom surface of the dop 36 can act as the locating surface.

### Figure 6

For the "Pre-Exposure Bake" and also for the "Post-Exposure Bake" referred to above, a Peltier device or heat pump (a thermoelectric cooler) can be used, both for heating up the diamond 7 and for cooling it down.

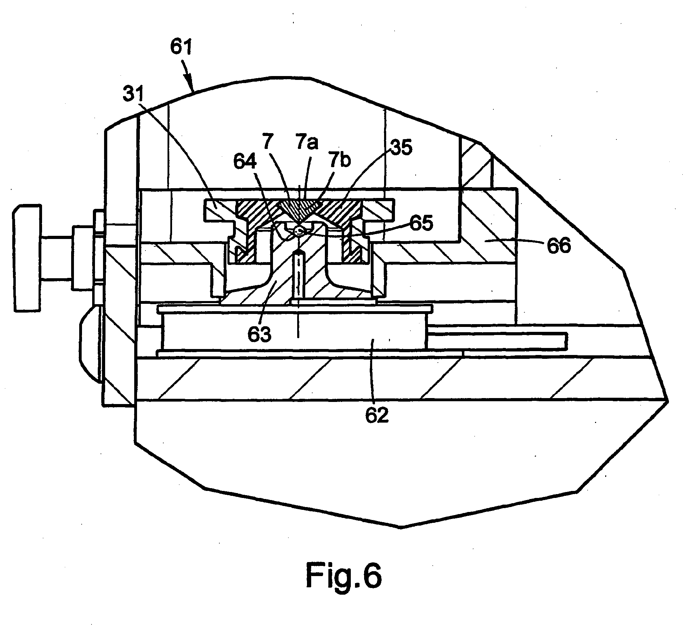

The Peltier device of which Figure 6 shows a part is a standard heat pump having a Peltier unit 62 with a heater tip 63. The tip 63 is formed with a cavity 64 which contains a small blob of liquid solder 65. A tip clamp 66 is shaped to receive the dop 31 (or 36), which is allowed to drop down (it is shown slightly raised in Figure 6) so that the solder 65 wets the culet 7b of the diamond 7. In this way, the diamond 7 is heated, heating the resist on the table 7a to bake the resist (not shown). After a proper baking time, the Peltier heat pump 61 is reversed and the diamond 7 rapidly cooled. The solder 65 sets at about 70°C but still provides good thermal contact though it does not wet the diamond 7. Afterwards, the dop 31 (or 36) can be merely lifted off, and no cleaning is necessary.

The use of the Peltier device gives excellent control over the baking cycle. There can be a very fast heating time of 3 to 4 seconds and a fast cooling time of 12 to 15 seconds together with a bake of for instance 110°C for one minute. The holding material 35 can be chosen such that it is not damaged by the heating. As the holding material 35 can be a thermal insulator, the dop ring 32 remains cool and can be handled, as well as excessive heat loss being avoided.

The dop 31 or 36 is then processed as described above, from "Cleaning" to "Etching". For "Release" in the case of the dop 31, the diamond 7 is merely pushed out of the dop 31 by using a suitable non-metallic tool to press on the culet 7b. The remainder of the holding material 35 can be ripped out of the dop ring 32 and the dop ring 32 recycled. In the case of the dop 36, the holding material 35 can be cut off if it is too hard to permit the diamond 7 to be pushed out.

## Claims

1. A method of mounting a gemstone or industrial diamond (7) for the formation of a mark on a surface (7a) thereof, comprising placing the gemstone or diamond (7) in a container or holder (1, 21, 31, 42) and moulding a holding material (3, 35) as a liquid between the sidewall or sidewalls (5, 22) of the container (1, 21, 31, 42) and the gemstone or diamond (7) in such a way the gemstone or diamond (7) does not touch the sidewall or sidewalls (5, 22) of the container (1, 21, 31, 42) and, looking in a direction normal to the surface (7a) to be marked, there is holding material (3, 35) both in front of and behind parts of the gemstone or diamond (7) so that when the holding material (3, 35) is set, the gemstone or diamond (7) is held securely by the holding material (3, 35), and causing or allowing the holding material (3, 35) to set, the container (1, 21, 31, 42) defining a locating surface (6), which locating surface (6) can be directly or indirectly used for locating the gemstone or diamond (7) for a further procedure for the formation of said mark, **characterised in that** when the gemstone or diamond (7) is placed in the container (1, 21, 31, 41), said surface (7a) is engaged with a contact surface (10, 23, 55) so that at least the surface (7a) to be marked remains free of holding material (3, 35), the locating surface (6) forming part of the container (1, 21, 31, 42) being coincident with or parallel to the surface (7a) to be marked, whereby the locating surface (6) can be used for locating the gemstone or diamond (7) with the surface (7a) to be marked generally in a predetermined plane.

2. The method of Claim 1, wherein there is around the gemstone or diamond (7) an uninterrupted ring of holding material (3, 35) separating the sidewall or sidewalls (5, 22) of the container from the gemstone or diamond (7).

3. The method of Claim 1, wherein the container (1, 21, 31, 42) has an opening whose border defines said locating surface (6), the border of the opening is engaged with said contact surface (10, 23, 55) prior to moulding the holding material (3, 35), and the border of the opening is disengaged from said contact surface (10, 23, 55) after the moulding, thereby providing the gemstone or industrial diamond (7) set in the container (1, 21, 31, 42) with the surface (7a) to be marked co-planar with said locating surface (6).

4. The method of Claim 3, wherein the opening of the container (1) is uppermost and the gemstone or industrial diamond (7) is lowered into to the container (1).

5. The method of Claim 4, wherein the container (1) is defined by a base (4) and a wall or walls (5) which are inwardly inclined in the upwards sense.

6. The method of Claim 4 or 5, wherein said contact surface (10) has a downwards projection (11) there around, positioned so that it surrounds the border of said opening when it engages the border of the opening.

7. The method of any of Claims 4 to 6, wherein the container (1) is at least partially filled with holding material (3) before relatively lowering the gemstone or industrial diamond (7) into the container (1).

8. The method of any of Claims 4 to 7, wherein there is at least one opening (13) in the contact surface (10) for supplying holding material (3) to the container (1) when the contact surface (10) is engaged with the border of the opening.

9. The method of any of Claims 4 to 8, wherein, after placing the gemstone or industrial diamond (7) in the container (1), further holding material (12) is supplied to the container (1).

10. The method of any of Claims 4 to 9, wherein the container (1) is substantially filled with the liquid holding material (3) so that the holding material contacts said contact surface (10).

11. The method of Claim 1 or 2, wherein the container (22) has a bottom opening which defines said locating surface (6), the surface to be marked being placed on said contact surface (10), the container (22) being placed over the gemstone or diamond (7) on said contact surface (10) to thereby place the gemstone or diamond (7) within the container (22), and liquid holding material (3) being supplied to the container (22).

12. The method of any of the preceding Claims, wherein the gemstone or industrial diamond (7) is held against said contact surface (10) by suction.

13. The method of any of Claims 1 to 11, wherein the gemstone or diamond (7) is placed on a member (54) having a recess for receiving the side of the gemstone or diamond (7) opposite to the surface (7a) to be marked, and the recessed member (54) is raised to hold said gemstone or diamond surface (7a) against said contact surface (55), which forms the top of the container (31, 42).

14. The method of any of the preceding Claims, wherein the container (31, 42) comprises an annular member (32) which provides the sidewall or sidewalls, at least a separate base member (41, 54) being provided during moulding and being removed after moulding so that the gemstone or diamond (7) remains held in the holding material surrounded by the annular member (32).

15. The method of any of Claims 1 to 4, 13 and 14, wherein the holding material (35) is moulded in liquid form around the gemstone or diamond (7) and then set to form the flexible or elastic holding material (35).

16. The method of any of the preceding Claims, wherein the sidewall or sidewalls of the container (31) are undercut (33).

17. The method of any of Claims 1 to 14, wherein the holding material (3) is indium.

18. The method of any of the preceding Claims, wherein the holding material (35) is a polymer.

19. The method of any of the preceding Claims, wherein the surface (7a) to be marked is the table of a gemstone (7).

20. The method of any of the preceding Claims, wherein a part (7b) of the gemstone or diamond (7) opposite the surface (7a) to be marked is not covered with holding material (3, 35) so that said part (7b) can be heated or cooled to thereby heat or cool the gemstone or diamond (7).

21. The method of Claim 20, wherein said part (7b) projects from surrounding holding material (35).

22. The method of any of the preceding Claims, wherein the holding material (3, 35) is flexible.

23. The method of any of the preceding Claims 1 to 21, wherein the holding material is elastic or an elastomer.

24. The method of Claim 22 or 23, wherein after the mark has been formed on the surface (7a) of the gemstone or diamond (7), the gemstone or diamond (7) is removed from the holding material (35) by pushing it out in a direction normal to the surface (7a) to be marked.

25. A method of forming a mark on a surface of a gemstone or industrial diamond (7), comprising preparing the gemstone or diamond (7) as set forth in any of the preceding Claims and directly or indirectly using said locating surface (6) to position the gemstone or diamond (7) such that said gemstone or diamond surface (7a) is parallel to and generally co-planar with a reference exposure plane (6).

26. The method of Claim 25, including spinning to apply a surface layer to the surface (7a) to be marked.

27. The method of Claim 26, wherein the surface layer is a lithography resist.

28. The method of Claim 27, wherein the lithography resist is baked after having been applied.

29. The method of any of the preceding Claims, wherein the gemstone or diamond (7) is secured to the holder (1, 21, 31, 36) such that a part (7b) of the gemstone or diamond (7) opposite the surface (7a) to be marked is accessible, and the resist is baked by thermally coupling said opposite part (7b) to a heat pump.

30. The method of Claim 29, wherein said opposite part (7b) projects, and wherein the heat pump has a heater defining a receptacle, a liquid metal being contained in the receptacle and said opposite part being placed in the liquid metal to thermally couple the gemstone or diamond (7) to the heat pump.

31. The method of Claim 29 or 30, wherein the heat pump is a thermoelectric cooler.

32. The method of any of Claims 29 to 31, wherein said part is subsequently cooled by the heat pump, to cool the gemstone or diamond (7).

33. The method of any of Claims 27 to 32, wherein after irradiation of the resist to expose part thereof, an image is developed by applying a developing liquid whilst spinning the gemstone or diamond (7).

34. A holder or container (1, 21, 31, 36) holding a gemstone or diamond (7) for the formation of a mark on a surface (7a) thereof, the gemstone or diamond (7) being held by a holding material (3, 35) which has been moulded around the gemstone or diamond (7), which holding material (3, 35) leaves free the surface (7a) to be marked and, looking in a direction normal to the surface (7a) to be marked, there is holding material (3, 35) in front of and behind parts of the gemstone or diamond (7) and which holding material (3, 35) is in contact with the whole periphery of the gemstone or diamond (7), so that the gemstone or diamond (7) is held securely by the holding material (3, 35), **characterised in that** the holder (1, 21, 31, 36) comprises a locating surface (6) which is used for locating the gemstone or diamond (7) for a further procedure for the formation of said mark, with the surface (7a) to be marked in a predetermined plane, the locating surface (6) being coincident with or parallel to the surface (7a) to be marked.

35. The holder of Claim 34, wherein the holding material (3, 35) is contained within a rigid ring (22, 32), one or both end faces of the ring defining a said locating surface.

36. The holder of Claims 34 or 35, wherein the holding material (35) has been moulded in liquid form around the gemstone or diamond (7) and then set to form the flexible or elastic holding material (3, 35).

37. The holder of any of Claims 34 to 36 wherein the holding material (3, 35) is flexible or elastic.

## Patentansprüche

1. Verfahren zum Befestigen eines Edelsteins oder Industriediamanten (7) für das Ausbilden einer Markierung auf einer Oberfläche (7a) davon, das die folgenden Schritte aufweist: Anordnen des Edelsteins oder Diamanten (7) in einem Behälter oder einer Aufnahmevorrichtung (1, 21, 31, 42) und Formen eines Aufnahmematerials (3, 35) als eine Flüssigkeit zwischen der Seitenwand oder den Seitenwänden (5, 22) des Behälters (1, 21, 31, 42) und dem Edelstein oder Diamanten (7) in einer derartigen Weise, dass der Edelstein oder Diamant (7) nicht die Seitenwand oder Seitenwände (5, 22) des Behälters (1, 21, 31, 42) berührt und, betrachtet man in einer Richtung senkrecht zu der zu markierenden Oberfläche (7a), ist das Aufnahmematerial (3, 35) sowohl vor als auch hinter Teilen des Edelsteins oder Diamanten (7) vorhanden, so dass, wenn das Aufnahmematerial (3, 35) verfestigt wird, der Edelstein oder Diamant (7) sicher durch das Aufnahmematerial (3, 35) gehalten wird; und Bewirken oder Zulassen, dass sich das Aufnahmematerial (3, 35) verfestigt, wobei der Behälter (1, 21, 31, 42) eine Positionierfläche (6) definiert, wobei die Positionierfläche (6) direkt oder indirekt für das Positionieren des Edelsteins oder Diamanten (7) für eine weitere Verfahrensweise zur Ausbildung der Markierung benutzt werden kann, **dadurch gekennzeichnet, dass**, wenn der Edelstein oder Diamant (7) im Behälter (1, 21, 31, 42) angeordnet wird, die Oberfläche (7a) mit einer Kontaktfläche (10, 23, 55) in Eingriff gebracht wird, so dass mindestens die zu markierende Oberfläche (7a) frei vom Aufnahmematerial (3, 35) bleibt, wobei die Positionierfläche (6), die einen Teil des Behälters (1, 21, 31, 42) bildet, mit der zu markierenden Oberfläche (7a) übereinstimmt oder parallel dazu ist, wodurch die Positionierfläche (6) für das Positionieren des Edelsteins oder Diamanten (7) mit der zu markierenden Oberfläche (7a) im Allgemeinen in einer vorgegebenen Ebene benutzt werden kann.

2. Verfahren nach Anspruch 1, bei dem um den Edelstein oder Diamanten (7) herum ein ununterbrochener Ring des Aufnahmematerials (3, 35) vorhanden ist, der die Seitenwand oder Seitenwände (5, 22) des Behälters vom Edelstein oder Diamanten (7) trennt.

3. Verfahren nach Anspruch 1, bei dem der Behälter (1, 21, 31, 42) eine Öffnung aufweist, deren Rand die Positionierfläche (6) definiert, wobei der Rand der Öffnung mit der Kontaktfläche (10, 23, 55) vor dem Formen des Aufnahmematerials (3, 35) in Eingriff gebracht wird, und wobei der Rand der Öffnung von der Kontaktfläche (10, 23, 55) nach dem Formen getrennt wird, wodurch der Edelstein oder Industriediamant (7), der im Behälter (1, 21, 31, 42) verfestigt wird, mit der zu markierenden Oberfläche (7a) koplanar mit der Positionierfläche (6) bereitgestellt wird.

4. Verfahren nach Anspruch 3, bei dem die Öffnung des Behälters (1) zuoberst ist und der Edelstein oder Industriediamant (7) in den Behälter (1) abgesenkt wird.

5. Verfahren nach Anspruch 4, bei dem der Behälter (1) durch einen Unterbau (4) und eine Wand oder Wände (5) definiert wird, die nach innen in der Aufwärtsrichtung geneigt sind.

6. Verfahren nach Anspruch 4 oder 5, bei dem die Kontaktfläche (10) einen nach unten gerichteten Vorsprung (11) dort herum aufweist, der so positioniert ist, dass er den Rand der Öffnung umgibt, wenn er mit dem Rand der Öffnung in Eingriff ist.

7. Verfahren nach einem der Ansprüche 4 bis 6, bei dem der Behälter (1) mindestens teilweise mit dem Aufnahmematerial (3) gefüllt wird, bevor der Edelstein oder Industriediamant (7) relativ in den Behälter (1) abgesenkt wird.

8. Verfahren nach einem der Ansprüche 4 bis 7, bei dem mindestens eine Öffnung (13) in der Kontaktfläche (10) für das Zuführen des Aufnahmematerials (3) zum Behälter (1) vorhanden ist, wenn die Kontaktfläche (10) mit dem Rand der Öffnung in Eingriff gebracht wird.

9. Verfahren nach einem der Ansprüche 4 bis 8, bei dem nach dem Anordnen des Edelsteins oder Industriediamanten (7) im Behälter (1) weiteres Aufnahmematerial (12) dem Behälter (1) zugeführt wird.

10. Verfahren nach einem der Ansprüche 4 bis 9, bei dem der Behälter (1) im Wesentlichen mit dem flüssigen Aufnahmematerial (3) gefüllt wird, so dass das Aufnahmematerial die Kontaktfläche (10) berührt.

11. Verfahren nach einem der Ansprüche 1 oder 2, bei dem der Behälter (22) eine untere Öffnung aufweist, die die Positionierfläche (6) definiert, wobei die zu markierende Oberfläche auf der Kontaktfläche (10) angeordnet wird, wobei der Behälter (22) über dem Edelstein oder Diamanten (7) auf der Kontaktfläche (10) angeordnet wird, um dadurch den Edelstein oder Diamanten (7) innerhalb des Behälters (22) anzuordnen, und wobei flüssiges Aufnahmematerial (3) dem Behälter (22) zugeführt wird.

12. Verfahren nach einem der vorhergehenden Ansprüche, bei dem der Edelstein oder Industriediamant (7) gegen die Kontaktfläche (10) durch Ansaugen gehalten wird.

13. Verfahren nach einem der Ansprüche 1 bis 11, bei dem der Edelstein oder Diamant (7) auf einem Element (54) mit einer Aussparung für das Aufnehmen der Seite des Edelsteins oder Diamanten (7), gegenüberliegend der zu markierenden Oberfläche (7a), angeordnet wird, und wobei das ausgesparte Element (54) angehoben wird, um die Oberfläche (7a) des Edelsteins oder Diamanten gegen die Kontaktfläche (55) zu halten, die die Oberseite des Behälters (31, 42) bildet.

14. Verfahren nach einem der vorhergehenden Ansprüche, bei dem der Behälter (31, 42) ein ringförmiges Element (32) aufweist, das die Seitenwand oder Seitenwände bereitstellt, wobei mindestens ein separates Basiselement (41, 54) während des Formens bereitgestellt und nach dem Formen entfernt wird, so dass der Edelstein oder Diamant (7) in dem Aufnahmematerial festgehalten bleibt, das vom ringförmigen Element (32) umgeben wird.

15. Verfahren nach einem der Ansprüche 1 bis 4, 13 und 14, bei dem das Aufnahmematerial (35) in flüssiger Form um den Edelstein oder Diamanten (7) geformt und danach verfestigt wird, um das flexible oder elastische Aufnahmematerial (35) zu bilden.

16. Verfahren nach einem der vorhergehenden Ansprüche, bei dem die Seitenwand oder Seitenwände des Behälters (31) unterschnitten ist/sind (33).

17. Verfahren nach einem der Ansprüche 1 bis 14, bei dem das Aufnahmematerial (3) Indium ist.

18. Verfahren nach einem der vorhergehenden Ansprüche, bei dem das Aufnahmematerial (35) ein Polymer ist.

19. Verfahren nach einem der vorhergehenden Ansprüche, bei dem die zu markierende Oberfläche (7a) die obere Fläche eines Edelsteins (7) ist.

20. Verfahren nach einem der vorhergehenden Ansprüche, bei dem ein Teil (7b) des Edelsteins oder Diamanten (7), gegenüberliegend der zu markierenden Oberfläche (7a), nicht mit dem Aufnahmematerial (3, 35) bedeckt ist, so dass der Teil (7b) erhitzt oder abgekühlt werden kann, um dadurch den Edelstein oder Diamanten (7) zu erhitzen oder abzukühlen.

21. Verfahren nach Anspruch 20, bei dem der Teil (7b) aus dem umgebenden Aufnahmematerial (35) vorsteht.

22. Verfahren nach einem der vorhergehenden Ansprüche, bei dem das Aufnahmematerial (3, 35) flexibel ist.

23. Verfahren nach einem der vorhergehenden Ansprüche 1 bis 21, bei dem das Aufnahmematerial elastisch oder ein Elastomer ist.

24. Verfahren nach Anspruch 22 oder 23, bei dem nach der Ausbildung der Markierung auf der Oberfläche (7a) des Edelsteins oder Diamanten (7) der Edelstein oder Diamant (7) aus dem Aufnahmematerial (35) entfernt wird, indem er in einer Richtung senkrecht zu der zu markierenden Oberfläche (7a) herausgedrückt wird.

25. Verfahren zur Ausbildung einer Markierung auf einer Oberfläche eines Edelsteins oder Industriediamanten (7), das die Schritte des Vorbereitens des Edelsteins oder Diamanten (7), wie es in einem der vorhergehenden Ansprüche dargelegt wird, und des direkten oder indirekten Benutzens der Positionierfläche (6) aufweist, um den Edelstein oder Diamanten (7) so zu positionieren, dass die Oberfläche (7a) des Edelsteins oder Diamanten parallel zu und im Allgemeinen koplanar mit einer Bezugsexpositionsebene (6) ist.

26. Verfahren nach Anspruch 25, das den Schritt des Drehens umfasst, um eine Oberflächenschicht auf die zu markierende Oberfläche (7a) aufzubringen.

27. Verfahren nach Anspruch 26, bei dem die Oberflächenschicht eine lithografische Resistschicht ist.

28. Verfahren nach Anspruch 27, bei dem die lithografische Resistschicht gehärtet wird, nachdem sie aufgebracht wurde.

29. Verfahren nach einem der vorhergehenden Ansprüche, bei dem der Edelstein oder Diamant (7) an der Aufnahmevorrichtung (1, 21, 31, 36) gesichert ist, so dass ein Teil (7b) des Edelsteins oder Diamanten (7), gegenüberliegend der zu markierenden Oberfläche (7a), zugänglich ist, und die Resistschicht durch thermisches Verbinden des gegenüberliegenden Teils (7b) mit einer Wärmepumpe gehärtet wird.

30. Verfahren nach Anspruch 29, bei dem der gegenüberliegende Teil (7b) vorsteht, und bei dem die Wärmepumpe einen Heizkörper aufweist, der eine Aufnahmeeinrichtung definiert, wobei ein flüssiges Metall in der Aufnahmeeinrichtung enthalten ist und der gegenüberliegende Teil im flüssigen Metall angeordnet wird, um den Edelstein oder Diamanten (7) mit der Wärmepumpe thermisch zu verbinden.

31. Verfahren nach Anspruch 29 oder 30, bei dem die Wärmepumpe ein thermoelektrischer Kühler ist.

32. Verfahren nach einem der Ansprüche 29 bis 31, bei dem der Teil anschließend mittels der Wärmepumpe abgekühlt wird, um den Edelstein oder Diamanten (7) abzukühlen.

33. Verfahren nach einem der Ansprüche 27 bis 32, bei dem nach der Bestrahlung der Resistschicht, um einen Teil davon zu exponieren, ein Bild durch Anwenden einer Entwicklungsflüssigkeit entwickelt wird, während der Edelstein oder Diamant (7) gedreht wird.

34. Aufnahmevorrichtung oder Behälter (1, 21, 31, 36), die einen Edelstein oder Diamanten (7) zur Ausbildung einer Markierung auf einer Oberfläche (7a) davon aufnimmt, wobei der Edelstein oder Diamant (7) von einem Aufnahmematerial (3, 35) aufgenommen wird, das um den Edelstein oder Diamanten (7) herum geformt wurde, wobei das Aufnahmematerial (3, 35) die zu markierende Oberfläche (7a) freilässt, und, wenn man in einer Richtung senkrecht zu der zu markierenden Oberfläche (7a) betrachtet, ist ein Aufnahmematerial (3, 35) vor und hinter Teilen des Edelsteins oder Diamanten (7) vorhanden, und wobei das Aufnahmematerial (3, 35) mit dem gesamten Umfang des Edelsteins oder Diamanten (7) in Kontakt ist, so dass der Edelstein oder Diamant (7) sicher durch das Aufnahmematerial (3, 35) gehalten wird, **dadurch gekennzeichnet, dass** die Aufnahmevorrichtung (1, 21, 31, 36) eine Positionierfläche (6) aufweist, die für das Positionieren des Edelsteins oder Diamanten (7) für eine weitere Verfahrensweise zur Ausbildung der Markierung mit der zu markierenden Oberfläche (7a) in einer vorgegebenen Ebene benutzt wird, wobei die Positionierfläche (6) mit der zu markierenden Oberfläche (7a) übereinstimmt oder parallel dazu ist.

35. Aufnahmevorrichtung nach Anspruch 34, bei der das Aufnahmematerial (3, 35) innerhalb eines starren Ringes (22, 32) enthalten ist, wobei eine oder beide Planflächen des Ringes eine Positionierfläche definieren.

36. Aufnahmevorrichtung nach Anspruch 34 oder 35, bei der das Aufnahmematerial (35) in flüssiger Form um den Edelstein oder Diamanten (7) herum geformt und danach verfestigt wurde, um das flexible oder elastische Aufnahmematerial (3, 35) zu bilden.

37. Aufnahmevorrichtung nach einem der Ansprüche 34 bis 36, bei der das Aufnahmematerial (3, 35) flexibel oder elastisch ist.

## Revendications

1. Procédé de montage d'une pierre précieuse ou d'un diamant industriel (7) pour la formation d'une marque sur une surface (7a) de celle-ci, comprenant les étapes de positionnement de la pierre précieuse ou du diamant (7) dans un récipient ou un support (1, 21, 31, 42) et de moulage d'un matériau de support (3, 35) sous forme d'un liquide entre la paroi latérale ou les parois latérales (5, 22) du récipient (1, 21, 31, 42) et la pierre précieuse ou le diamant (7), de sorte que la pierre précieuse ou le diamant (7) ne touche pas la paroi latérale ou les parois latérales (5, 22) du récipient (1, 21, 31, 42), et, vu dans la direction perpendiculaire à la surface (7a) devant être marquée, le matériau de support (3, 35) est présent devant et derrière des parties de la pierre précieuse ou du diamant (7), de sorte qu'après le durcissement du matériau de support (3, 35), la pierre précieuse ou le diamant (7) est supportée fermement par le matériau de support (3, 35), et d'entraînement ou d'autorisation d'un durcissement du matériau de support (3, 35), le récipient (1, 21, 31, 42) définissant une surface de positionnement (6), cette surface de positionnement (6) pouvant être utilisée de manière directe ou indirecte pour positionner la pierre précieuse ou le diamant (7) en vue d'une procédure ultérieure, pour la formation de ladite marque, **caractérisé en ce que**, lorsque la pierre précieuse ou le diamant (7) est placé dans le récipient (1, 21, 31, 42), ladite surface (7a) est engagée dans une surface de contact (10, 23, 55), au moins la surface (7a) devant être marquée restant ainsi exempte de matériau de support (3, 35), la surface de positionnement (6) faisant partie du récipient (1, 21, 31, 42) coïncidant avec la surface (7a) devant être marquée ou étant parallèle à celle-ci, la surface de positionnement (6) pouvant ainsi servir à positionner la pierre précieuse ou le diamant (7) de sorte que la surface (7a) devant être marquée se situe en général dans un plan prédéterminé.

2. Procédé selon la revendication 1, dans lequel la pierre précieuse ou le diamant (7) est entourée d'un anneau ininterrompu de matériau de support (3, 35), séparant la paroi latérale ou les parois latérales (5, 22) du récipient de la pierre précieuse ou du diamant (7).

3. Procédé selon la revendication 1, dans lequel le récipient (1, 21, 31, 42) comporte une ouverture, dont la bordure définit ladite surface de positionnement (6), la bordure de l'ouverture étant engagée dans ladite surface de contact (10, 23, 55) avant le moulage du matériau de support (3, 35), la bordure de l'ouverture étant dégagée de ladite surface de contact (10, 23, 55) après le moulage, la pierre précieuse ou le diamant industriel (7) étant ainsi placée dans le récipient (1, 21, 31, 42) de sorte que la surface (7a) devant être marquée est coplanaire à ladite surface de positionnement (6).

4. Procédé selon la revendication 3, dans lequel l'ouverture du récipient (1) se situe au niveau supérieur extrême, la pierre précieuse ou le diamant industriel (7) étant abaissé dans le récipient (1).

5. Procédé selon la revendication 4, dans lequel le récipient (1) est défini par une base (4) et une paroi ou des parois (5) inclinées vers l'intérieur dans le sens allant vers le haut.

6. Procédé selon les revendications 4 ou 5, dans lequel ladite surface de contact (10) comporte une saillie s'étendant vers le bas (11) et l'entourant, positionnée de sorte à entourer la bordure de ladite ouverture lors de son engagement dans la bordure de l'ouverture.

7. Procédé selon l'une quelconque des revendications 4 à 6, dans lequel le récipient (1) est au moins partiellement rempli de matériau de support (3) avant l'abaissement relatif de la pierre précieuse ou du diamant industriel (7) dans le récipient (1).

8. Procédé selon l'une quelconque des revendications 4 à 7, dans lequel au moins une ouverture (13) est formée dans la surface de contact (10) pour amener le matériau de support (3) vers le récipient (1) lorsque la surface de contact (10) est engagée dans la bordure de l'ouverture.

9. Procédé selon l'une quelconque des revendications 4 à 8, dans lequel, après le placement de la pierre précieuse ou du diamant industriel (7) dans le récipient (1), une quantité additionnelle de matériau de support additionnel (12) est remplie dans le récipient.

10. Procédé selon l'une quelconque des revendications 4 à 9, dans lequel le récipient (1) est pour l'essentiel rempli de matériau de support liquide (3), de sorte que le matériau de support contacte ladite surface de contact (10).

11. Procédé selon les revendications 1 ou 2, dans lequel le récipient (22) comporte une ouverture inférieure, définissant ladite surface de positionnement (6), la surface devant être marquée étant placée sur ladite surface de contact (10), le récipient (22) étant placé au-dessus de la pierre précieuse ou du diamant (7) sur ladite surface de contact (10), pour placer ainsi la pierre précieuse ou le diamant (7) dans le récipient (22), du matériau de support liquide (3) étant rempli dans le récipient (22).

12. Procédé selon l'une quelconque des revendications précédentes, dans lequel la pierre précieuse ou le diamant industriel (7) est retenu contre ladite surface de contact (10) par aspiration.

13. Procédé selon l'une quelconque des revendications 1 à 11, dans lequel la pierre précieuse ou le diamant (7) est placée sur un élément (54) comportant un évidement pour recevoir le côté de la pierre précieuse ou du diamant (7), opposé à la surface (7a) devant être marquée, l'élément évidé (54) étant soulevé pour retenir ladite surface (7a) de la pierre précieuse ou du diamant contre ladite surface de contact (55), formant la partie supérieure du récipient (31, 42).

14. Procédé selon l'une quelconque des revendications précédentes, dans lequel le récipient (31, 42) comprend un élément annulaire (32) établissant la paroi latérale ou les parois latérales, au moins un élément de base séparé (41, 54) étant fourni au cours du moulage et étant retiré après le moulage, de sorte que la pierre précieuse ou le diamant (7) reste supporté dans le matériau de support entouré par l'élément annulaire (32).

15. Procédé selon l'une quelconque des revendications 1 à 4, 13 et 14, dans lequel le matériau de support (35) est moulé sous une forme liquide autour de la pierre précieuse ou du diamant (7) avant d'être durci pour former le matériau de support flexible ou élastique (35).

16. Procédé selon l'une quelconque des revendications précédentes, dans lequel la paroi latérale ou les parois latérales du récipient (31) sont entaillées (33).

17. Procédé selon l'une quelconque des revendications 1 à 14, dans lequel le matériau de support (3) est de l'indium.

18. Procédé selon l'une quelconque des revendications précédentes, dans lequel le matériau de support (35) est un polymère.

19. Procédé selon l'une quelconque des revendications précédentes, dans lequel la surface (7a) devant être marquée est la table d'une pierre précieuse (7).

20. Procédé selon l'une quelconque des revendications précédentes, dans lequel une partie (7b) de la pierre précieuse ou du diamant (7) opposée à la surface (7a) devant être marquée n'est pas couverte de matériau de support (3, 35), de sorte que ladite partie (7b) peut être chauffée ou refroidie, pour chauffer ou refroidir ainsi la pierre précieuse ou le diamant (7).

21. Procédé selon la revendication 20, dans lequel ladite partie (7b) déborde du matériau de support environnant (35).

22. Procédé selon l'une quelconque des revendications précédentes, dans lequel le matériau de support (3, 35) est flexible.

23. Procédé selon l'une quelconque des revendications 1 à 21, dans lequel le matériau de support est élastique ou est constitué par un élastomère.

24. Procédé selon les revendications 22 ou 23, dans lequel, après la formation de la marque sur la surface (7a) de la pierre précieuse ou du diamant (7), la pierre précieuse ou le diamant (7) est retirée du matériau de support (35) en la poussant hors de celui-ci dans une direction perpendiculaire à la surface (7a) devant être marquée.

25. Procédé de formation d'une marque sur une surface d'une pierre précieuse ou d'un diamant industriel (7), comprenant les étapes de préparation de la pierre précieuse ou du diamant (7) selon l'une quelconque des revendications précédentes, et d'utilisation directe ou indirecte de la dite surface de positionnement (6) pour positionner la pierre précieuse ou le diamant (7) de sorte que ladite surface (7a) de la pierre précieuse ou du diamant est parallèle et en général coplanaire à un plan d'exposition de référence (6).

26. Procédé selon la revendication 25, englobant l'étape de rotation pour appliquer une couche de surface sur la surface (7a) devant être marquée.

27. Procédé selon la revendication 26, dans lequel la couche de surface est constituée par une réserve lithographique.

28. Procédé selon la revendication 27, dans lequel la réserve lithographique est cuite après son application.

29. Procédé selon l'une quelconque des revendications précédentes, dans lequel la pierre précieuse ou le diamant (7) est fixée sur le support (1, 21, 31, 36) de sorte qu'une partie (7b) de la pierre précieuse ou du diamant (7) opposée à la surface (7a) devant être marquée est accessible, la réserve étant cuite par accouplement thermique de ladite partie opposée (7b) à une pompe à chaleur.

30. Procédé selon la revendication 29, dans lequel ladite partie opposée (7b) fait saillie, la pompe à chaleur comportant un dispositif de chauffage définissant un réceptacle, un métal liquide étant contenu dans le réceptacle et ladite partie opposée étant placée dans le métal liquide en vue d'un accouplement thermique de la pierre précieuse ou du diamant (7) à la pompe à chaleur.

31. Procédé selon les revendications 29 ou 30, dans lequel la pompe à chaleur est un refroidisseur thermoélectrique.

32. Procédé selon l'une quelconque des revendications 29 à 31, dans lequel ladite partie est ensuite refroidie par la pompe à chaleur, pour refroidir la pierre précieuse ou le diamant (7).

33. Procédé selon l'une quelconque des revendications 27 à 32, dans lequel, après l'irradiation de la réserve pour exposer une partie de celle-ci, une image est développée en appliquant un liquide de développement tout en faisant tourner la pierre précieuse ou le diamant (7).

34. Support ou récipient (1, 21, 31, 36) pour supporter une pierre précieuse ou un diamant (7) en vue de la formation d'une marque sur une surface (7a) de celle-ci, la pierre précieuse ou le diamant (7) étant supportée par un matériau de support (3, 35) ayant été moulé autour de la pierre précieuse ou du diamant (7), ce matériau de support (3, 35) n'étant pas appliqué sur la surface (7a) devant être marquée, et, vu dans une direction perpendiculaire à la surface (7a) devant être marquée, le matériau de support (3, 35) est présent devant et derrière des parties de la pierre précieuse ou du diamant (7), ce matériau de support (3, 35) étant en contact avec l'ensemble de la périphérie de la pierre précieuse ou du diamant (7), de sorte que la pierre précieuse ou le diamant (7) est fermement supportée par le matériau de support (3, 35), **caractérisé en ce que** le support (1, 21, 31, 36) comprend une surface de positionnement (6) utilisée pour positionner la pierre précieuse ou le diamant (7) en vue d'une procédure ultérieure, pour la formation de ladite marque, la surface (7a) devant être marquée étant située dans un plan prédéterminé, la surface de positionnement (6) coïncidant avec la surface (7a) devant être marquée ou étant parallèle à celle-ci.

35. Support selon la revendication 34, dans lequel le matériau de support (3, 35) est contenu dans un anneau rigide (22, 32), l'une ou les deux faces d'extrémité de l'anneau définissant ladite surface de positionnement.

36. Support selon les revendications 34 ou 35, dans lequel le matériau de support (35) a été moulé sous une forme liquide autour de la pierre précieuse ou du diamant (7) avant d'être durci pour former le matériau de support flexible ou élastique (3, 35).

37. Support selon l'une quelconque des revendications 34 ou 36, dans lequel le matériau de support (3, 35) est flexible ou élastique.
